# EUROPEAN PATENT APPLICATION

(11) **EP 3 750 786 A1**
(43) Date of publication of application: **16.12.2020**
(21) Application number: 19751953.1
(22) Date of filing: 01.02.2019
(51) Int. Cl.: B62D 25/08, B62D 21/02

(54) **FORCE TRANSFER SYSTEM FOR FRONT VEHICLE BODY COLLISION AND VEHICLE**

(30) Priority: 08.02.2018 CN 201810126853
(71) Applicant: Nio Nextev Limited, Hong Kong (CN)
(72) Inventor: HUANG, Chenhui, Hong Kong (CN); FONTS, Pere, Hong Kong (CN); ZHAO, Xinchao, Hong Kong (CN); ZHANG, Honggang, Hong Kong (CN)
(74) Representative: Vossius & Partner Patentanwälte Rechtsanwälte mbB
(86) International application number: PCT/CN2019/074377
(87) International publication number: WO 2019/154309

(57) **Abstract**

Disclosed is a force transmission system for a front vehicle body collision. The force transmission system can bear a first force transmission path, the first force transmission path comprising a front longitudinal beam, a footrest (1), a torsion box (2), an A-pillar (3) and a sill (4), wherein a transition section (5) is disposed at a position where the A-pillar (3) is connected to the sill (4), the torsion box (2) is arranged between the footrest (1) and the transition section (5), and the torsion box (2) is a casting made of an aluminium alloy and is provided with a cavity therein. The front longitudinal beam transmits a collision impact force to the torsion box (2), and the torsion box (2) transmits the collision impact force to the footrest (1) and/or the sill (4). Disclosed is a vehicle provided with a force transmission system for a front vehicle body collision. The force transmission system for a front vehicle body collision improves the utilization of a vehicle interior space and an available transmission path.

## Description

### Technical Field

The present invention relates to the technical field of vehicles, and more specifically, the present invention relates to a force transmission system for a front vehicle body collision and a vehicle provided with the force transmission system.

### Background Art

In recent years, with large promotion of domestic and foreign vehicle inspection and third-party evaluation agencies, the safety and comfort of the whole vehicle have been greatly improved. As users improve safety awareness, the requirements for vehicle crashworthiness also increase, so it is necessary to optimize a force transmission path of the front vehicle body collision.

In general, the design of a reasonable collision force transmission path needs to provide upper, middle and lower force transmission paths at the expense of space, and a bearing capacity of the transmission path is directly related to material strength, weight and cross-section design of a force bearing mechanism. At the same time, for pure electric vehicles, the size of a battery pack directly determines a travelling mileage of the vehicle, and if too many transmission paths are arranged (which occupy excess space and affect the volume of the battery pack), the practicality of the electric vehicle is bound to be reduced.

Therefore, how to design a new force transmission system to improve the utilization of space and an available transmission path is an important issue for vehicles, especially electric vehicles.

### Summary of the Invention

In view of this, according to a first aspect of the present invention, it provides a force transmission system for a front vehicle body collision, thereby effectively solving the above-mentioned problems and other problems in the prior art. In the force transmission system according to the present invention, the force transmission system may bear a first force transmission path, the first force transmission path comprising a front longitudinal beam, a footrest, a torsion box, an A-pillar and a sill, wherein a transition section is disposed at a position where the A-pillar is connected to the sill, the torsion box is arranged between the footrest and the transition section, and the torsion box is a casting made of an aluminium alloy and is provided with a cavity therein; and the front longitudinal beam transmits a collision impact force to the torsion box, and the torsion box transmits the collision impact force to the footrest and/or the sill.

In the above force transmission system, preferably, the force transmission system may also bear a second force transmission path and/or a third force transmission path, wherein the second force transmission path comprises an upper longitudinal beam, an A-pillar, and a door waist; and the third force transmission path comprises a sub-frame, a central channel, and a longitudinal beam extension.

In the above force transmission system, preferably, the A-pillar, the footrest and the sill are made of an aluminium alloy.

In the above force transmission system, preferably, the torsion box comprises a body and a support for reinforcement, and the support is integrally formed with the body.

In the above force transmission system, preferably, the support is provided as a plurality of partitions, and the partitions are arranged on the body of the torsion box at equal spacings.

In the above force transmission system, preferably, the partitions divide the cavity of the torsion box into compartments having the same cross-sectional size.

In the above force transmission system, preferably, a socket for installing a battery coolant is disposed on a back side of the footrest.

In the above force transmission system, preferably, the torsion box and the footrest are fixedly connected by an L-shaped bracket.

In the above force transmission system, preferably, the torsion box and the footrest are connected by a fastener.

In the above force transmission system, preferably, the fastener is a bolt.

Furthermore, according to a second aspect of the present invention, it also provides a vehicle provided with the above-mentioned force transmission system.

In the above-mentioned vehicle, preferably, the vehicle is a vehicle with an all aluminium alloy vehicle body.

In the above-mentioned vehicle, preferably, the vehicle is an electric vehicle.

It can be understood that the force transmission system for a front vehicle body collision of the present invention not only improves a force transmission efficiency of the main transmission path, that is, reduces a force transmission ratio of an upper path to a lower path generally used in traditional vehicles, but also leaves enough space for a battery pack to increase an endurance mileage.

### Brief Description of the Drawings

The technical solutions of the present invention will be further described in detail below in conjunction with the accompanying drawings and specific embodiments, in which:
Fig. 1 is a schematic structural view of a specific embodiment of a force transmission system for a front vehicle body collision of the present invention;
Fig. 2 is a schematic structural view of the force transmission system for a front vehicle body collision of Fig. 1 with a footrest omitted; and
Fig. 3 is a schematic structural view of the force transmission system for a front vehicle body collision of Fig. 1 when viewed from a back side.

### Detailed Description of Embodiments

The specific embodiments of the present invention will be described in detail below in conjunction with the accompanying drawings. First of all, it should be noted that orientation terms, which are or may be mentioned in this specification, such as upper, lower, left, right, front, rear, inner side, outer side, top, bottom, etc., are defined with respect to the configuration shown in each drawing, they are relative concepts, so they may correspondingly vary according to their different locations and different use states. Therefore, these or other orientation terms should not be construed as restrictive terms as well.

Orientation terms such as X direction, Y direction, Z direction, etc. may be involved in the following content. X direction, Y direction, and Z direction indicate a lengthwise direction, a widthwise direction, and a height direction of the vehicle in the XYZ coordinate system of the vehicle, respectively, and a front end of each component refers to an end close to the head of the vehicle, and a rear end refers to an end close to the rear of the vehicle. It should be understood that the use of orientation terms should not limit the scope of protection as claimed in this application.

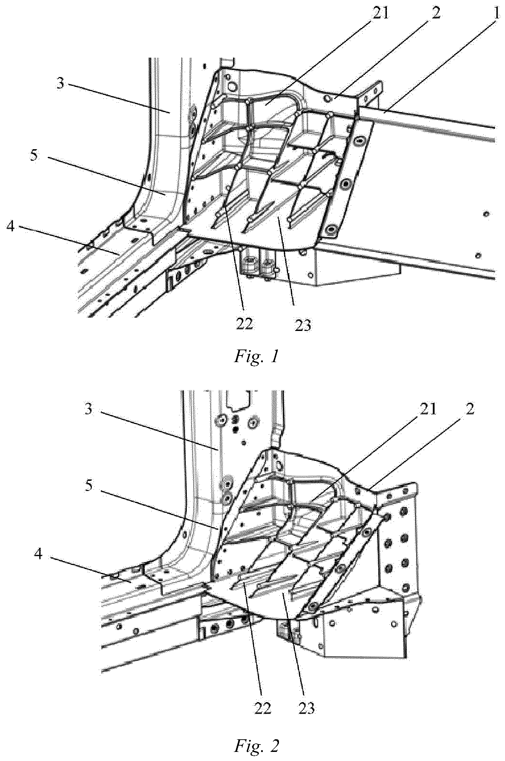

Fig. 1 shows one specific embodiment of a force transmission system for a front vehicle body collision of the present invention. It should be noted that the force transmission system can also be expressed as a force transmission structure or a force transmission path. It can be clearly seen from Fig. 1 that the force transmission system can bear a first force transmission path comprising a front longitudinal beam (not shown), a footrest 1, a torsion box 2, an A-pillar 3 at the front of the vehicle body, and a sill 4. An arc-shaped transition section 5 is disposed at a position where the A-pillar 3 is connected to the sill 4. The torsion box 2 is arranged between the footrest 1 and the transition section 5, and upon a front vehicle body collision, the front longitudinal beam transmits a collision impact force to the torsion box 2, and the torsion box 2 transmits the collision impact force to the footrest 1 and/or the sill 4. The torsion box 2 is a casting made of an aluminium alloy and is provided with a cavity therein to reserve a certain collapse space. It should be noted that an aluminium alloy part made by means of extrusion or high-pressure casting can increase its overall rigidity, and when the design is reasonable, the rigidity of the aluminium alloy casting can even exceed that of a steel stamping structure at the same mass condition. Therefore, in the case where the Z-direction bending moment limit is very high (a full plastic bending moment is very large), the torsion box 2 of the present invention can bear a higher bending moment and compression force. In addition to the torsion box 2, the A-pillar 3, the footrest 1 and the sill 4 are optionally made of an aluminium alloy, and form one piece with the torsion box 2. The vehicle body structure parts made of an aluminium alloy have the advantages of a light weight and a good collision energy absorption effect, so that the force transmission system meets the requirement of light weight of the whole vehicle.

In the above force transmission system for a front vehicle body collision, the force transmission system may also be designed with a second force transmission path and/or a third force transmission path, wherein the second force transmission path comprises an upper longitudinal beam, an A-pillar and a door waist, so that upon a front vehicle body collision, the upper longitudinal beam transmits the collision impact force to the A-pillar, and the A-pillar then transmits the collision impact force to the door waist; and the third force transmission path comprises a sub-frame, a central channel, and a longitudinal beam extension, so that upon a front vehicle body collision, the sub-frame can transmit the collision impact force to the central channel, and the central channel then transmits the collision impact force to the longitudinal beam extension. It can be seen that the above force transmission path makes full use of the main structural parts of the vehicle body, and in particular, a force transmission efficiency of the force transmission system is greatly improved by means of the first force transmission path. Those skilled in the art should recognize that the second force transmission path and the third force transmission path are preferred solutions for further dispersing the collision force generated upon a front vehicle body collision on the basis of the first force transmission path, and it is also possible to cancel the second force transmission path or the third force transmission path according to actual requirements.

In other preferred embodiments in combination with the above embodiments, the torsion box 2 has a body 21 and a support 22 for reinforcement, and the support 22 is integrally formed with the body 21. In the embodiment shown in Fig. 2, the support 22 may be provided as a plurality of partitions, and the partitions are arranged on the body 21 of the torsion box 2 at equal spacings. Further, the partitions may divide the cavity of the torsion box 2 into several independent compartments 23 having the same cross-sectional size. It is easily understood by those skilled in the art that the greater the number of compartments 23 in the torsion box, the greater a torsional rigidity of the entire torsion box 2. In consideration of molding feasibility and overall weight, those skilled in the art can integrate various safety design operating conditions to optimize. As an example, from magnitudes of the force transmission design of each part, bending moments and compression forces that the torsion box 2 theoretically bears in all directions are calculated, and using the sectional full plastic bending moment (or sectional bending moment limit) often used in collision mechanics as an evaluation index, the ratio of the actual bending moment born in each direction to the sectional full plastic bending moment is calculated as a reference for judging.

Continuing with Figs. 1 or 2, the torsion box 2 and the footrest 1 may be connected by a fastener, for example a high-strength bolt. It may also occur to those skilled in the art that the torsion box 2 and the footrest 1 may be fixedly connected by, for example, an L-shaped bracket (not shown). Of course, the connection form of the torsion box 2 and the footrest 1 is not limited to the aforementioned two manners.

In addition, the present invention also proposes a vehicle comprising the aforementioned force transmission system for a front vehicle body collision. The vehicle is preferably a vehicle with an all aluminium alloy vehicle body. Of course, in addition to the aluminium alloy vehicle body, other vehicle bodies that use non-traditional vehicle body materials can also use the force transmission system provided by this application. Optionally, the vehicle is an electric vehicle.

It has been confirmed by experiments that in vehicle models with larger geometric dimensions, the force transmission system for a front vehicle body collision of the present invention has a full plastic bending moment in the Y direction (more than 150,000 Nm) equivalent to the traditional vehicle particularly within 150 mm behind a root of the front longitudinal beam, thereby facilitating transmission of an axial force and resisting rotation in the Y direction, while reducing an intrusion amount for an occupant compartment. In addition, the force transmission system of the present invention also has a high full plastic bending moment rotating in the Z direction, and varies proportionally with the full plastic bending moment in the Y direction, and the bearing capacity within 150 mm behind the root of the front longitudinal beam greatly exceeds that of the traditional vehicle.

In summary, the force transmission system for a front vehicle body collision of the present invention ensures a lower intrusion amount for an occupant compartment than the traditional vehicle and also an excellent crashworthiness. By providing multiple transmission paths, especially increasing the strength of the parts in the central path, the collision force is dispersed to multiple structural parts of the vehicle body, thereby improving the overall impact resistance of the front vehicle body. Therefore, it is highly recommended to promote the application of this force transmission system for a front vehicle body collision in vehicles, especially electric vehicles.

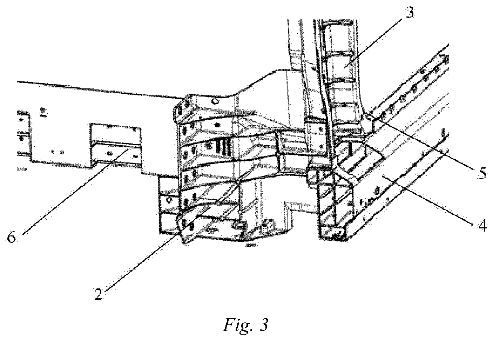

Several specific embodiments are listed above to detail the force transmission system for a front vehicle body collision of the present invention and the vehicle provided with the force transmission system, and these examples are only for explaining the principle of the present invention and its embodiments, and not limiting the present invention; and those of ordinary skill in the art can make various modifications and improvements without departing from the spirit and scope of the present invention. For example, a socket 6 for installing a battery coolant is disposed on a back side of the footrest 1, as shown in Fig. 3. Therefore, all equivalent technical solutions should fall within the scope of the invention and be defined by the claims of the invention.

## Claims

1. A force transmission system for a front vehicle body collision, **characterized in that**, the force transmission system is capable of bearing a first force transmission path, the first force transmission path comprising a front longitudinal beam, a footrest, a torsion box, an A-pillar and a sill, wherein a transition section is disposed at a position where the A-pillar is connected to the sill, the torsion box is fixed between the footrest and the transition section, and the torsion box is a casting made of an aluminium alloy and is provided with a cavity therein; and the front longitudinal beam transmits a collision impact force to the torsion box, and the torsion box transmits the collision impact force to the footrest and/or the sill.

2. The force transmission system according to claim 1, **characterized in that**, the force transmission system is also capable of bearing a second force transmission path and/or a third force transmission path, wherein the second force transmission path comprises an upper longitudinal beam, an A-pillar, and a door waist; and the third force transmission path comprises a sub-frame, a central channel, and a longitudinal beam extension.

3. The force transmission system according to claim 1, **characterized in that**, the A-pillar, the footrest and the sill are made of an aluminium alloy.

4. The force transmission system according to claim 3, **characterized in that**, the torsion box comprises a body and a support for reinforcement, and the support is integrally formed with the body.

5. The force transmission system according to claim 4, **characterized in that**, the support is provided as a plurality of partitions, and the partitions are arranged on the body of the torsion box at equal spacings.

6. The force transmission system according to claim 5, **characterized in that**, the partitions divide the cavity of the torsion box into compartments having the same cross-sectional size.

7. The force transmission system according to claim 1 or 2, **characterized in that**, a socket for installing a battery coolant is disposed on a back side of the footrest.

8. The force transmission system according to claim 1 or 2, **characterized in that**, the torsion box and the footrest are fixedly connected by an L-shaped bracket.

9. The force transmission system according to claim 1 or 2, **characterized in that**, the torsion box and the footrest are connected by a fastener.

10. The force transmission system according to claim 9, **characterized in that**, the fastener is a bolt.

11. A vehicle, **characterized in that**, the vehicle is provided with the force transmission system of any proceeding claim.

12. The vehicle according to claim 11, **characterized in that**, the vehicle is a vehicle with an all aluminium alloy vehicle body.

13. The vehicle according to claim 12, **characterized in that**, the vehicle is an electric vehicle.
